# FASCICULE DE BREVET EUROPEEN

(11) **EP 0 637 538 B1**
(45) Date de publication et mention de la délivrance du brevet: **06.11.1996**
(21) Numéro de dépôt: 94401769.8
(22) Date de dépôt: 01.08.1994
(51) Int. Cl.: B62D 21/15

(54) **Poutre d'absorption d'énergie notamment pour longerons ou traverses de véhicules**
Energieabsorptionsträger, insbesondere für Rahmenlängsträger oder Rahmenseitenträger für Fahrzeuge
Energy absorption beam, especially for longitudianl or transverse chassis members of vehicles

(30) Priorité: 05.08.1993 FR 9309676
(43) Date de publication de la demande: 08.02.1995
(73) Titulaire: SOLLAC, F-92800 Puteaux (FR)
(72) Inventeur: De Smet, Gabriel, F-95800 Enghein Les Bains (FR)
(74) Mandataire: Lanceplaine, Jean-Claude

(56) Documents cités:
- DE-A- 4 104 894
- GB-A- 548 897
- GB-A- 2 187 686
- US-A- 1 724 845
- US-A- 4 702 515

## Description

La présente invention a pour objet une poutre d'absorption d'énergie, notamment pour longerons ou traverses de véhicules.

Généralement les poutres d'absorption d'énergie, notamment pour longerons ou traverses de véhicules, sont constituées de deux éléments soudés entre eux pour former un caisson longitudinal.

Ces poutres ont pour but d'absorber l'énergie essentiellement de compression par déformation plastique du matériau constitutif de la poutre, lors d'une sollicitation mécanique, comme par exemple un choc.

Pour pouvoir absorber une quantité d'énergie déterminée à la compression de façon à répondre aux normes de sécurité exigées, ce type de poutres nécessite des parois d'épaisseur importante ce qui a pour inconvénient d'augmenter considérablement le poids de ladite poutre et de ce fait le poids total du véhicule.

Malgré l'augmentation de l'épaisseur des parois permettant d'absorber une plus grande quantité d'énergie pour une section de profil égale, une telle poutre présente l'inconvénient d'une amorce de déformation non contrôlée.

En effet, dans ce type de poutres, l'amorce de déformation se situe généralement au niveau du point le plus faible mécaniquement, comme par exemple, un point de soudure défaillant ou un défaut local dans l'acier constitutif de ladite poutre.

L'invention a pour but d'éviter ces inconvénients en proposant une poutre d'absorption d'énergie, notamment pour longerons ou traverses de véhicules, qui permet d'augmenter la quantité d'énergie absorbée à la compression dans sa section à poids égal et d'éviter une déformation aléatoire dans le cas d'une sollicitation mécanique.

L'invention a donc pour objet une poutre d'absorption d'énergie, notamment pour longerons ou traverses de véhicules, qui a en section la forme générale d'un I et comporte deux éléments profilés coopérant l'un avec l'autre pour former deux caissons reliés entre eux par une âme centrale et soudés l'un à l'autre au niveau de leurs bords latéraux et de leurs parties formant l'âme centrale (voir DE-A-4104894). L'invention est caractérisée en ce qu'elle comporte des moyens d'organisation et de contrôle de la déformation de ladite poutre lors d'une sollicitation mécanique en compression axiale formés par des saillies et des creux ménagés sur chaque partie des éléments profilés formant l'âme centrale et en vis à vis les uns des autres pour réaliser sur ladite âme une succession longitudinale de portions en contact et de cavités, lesdites portions en contact étant soudées entre elles.

Selon d'autres caractéristiques de l'invention :
- les creux sont réalisés par emboutissage et ont une forme ovoïde, dans le sens transversal de ladite poutre,
- les creux se prolongent sur les parties des éléments profilés adjacentes aux parties formant l'âme centrale,
- les saillies situées entre les creux sont formées par des portions de surface courbes,
- les saillies et les creux déterminent une succession d'ondulations continues non développables,
- le pas entre deux creux successifs est déterminé en fonction de l'organisation souhaitée de la déformation de ladite poutre lors d'une sollicitation mécanique en compression axiale,
- les moyens d'organisation et de contrôle de la déformation de la poutre sont formés par une tôle plane intercalée entre les deux éléments profilés, traversant chaque caisson et soudée auxdits éléments au niveau de leurs bords latéraux et de leurs parties formant l'âme centrale, ladite tôle plane étant percée, au niveau de chaque caisson, d'au moins une rangée d'orifices et les orifices de chaque rangée située dans le premier caisson étant symétriques aux orifices de chaque rangée située dans le second caisson par rapport à l'âme centrale,
- le pas entre deux orifices adjacents de chaque rangée est déterminé en fonction de l'organisation souhaitée de la déformation de ladite poutre lors d'une sollicitation mécanique en compression axiale,
- chaque caisson présente une section de forme dissymétrique au niveau des dimensions des parois dudit caisson,
- chaque caisson présente une section de forme dissymétrique au niveau de l'angle formé par deux parois adjacentes dudit caisson,
- chaque caisson présente une section de forme dissymétrique au niveau du rayon de courbure reliant deux parois adjacentes dudit caisson,
- chaque caisson présente une section de forme dissymétrique au niveau des dimensions des parois dudit caisson, de l'angle formé par deux parois adjacentes et du rayon de courbure reliant deux parois adjacentes,
- les parois des caissons comportent des ondulations continues non développables et dirigées dans le sens longitudinal de ladite poutre.

Les caractéristiques et avantages de la présente invention apparaîtront au cours de la description qui va suivre, donnée uniquement à titre d'exemple, faite en référence aux dessins annexés, sur lesquels :
- la Fig. 1 est une vue en perspective d'un exemple de réalisation d'une poutre d'absorption d'énergie selon l'invention,
- la Fig. 2 est une vue en coupe selon la ligne 2-2 de la Fig. 1,
- la Fig. 3 est une vue en coupe selon la ligne 3-3 de la Fig. 1,
- la Fig. 4 est une vue en coupe selon la ligne 4-4 de la Fig. 1,
- la Fig. 5 est une vue en perspective éclatée d'un autre exemple de réalisation d'une poutre d'absorption d'énergie selon l'invention,
- la Fig. 6 représente deux courbes montrant l'écrasement de deux poutres à masse égale en fonction de la force nécessaire pour provoquer cet écrasement.

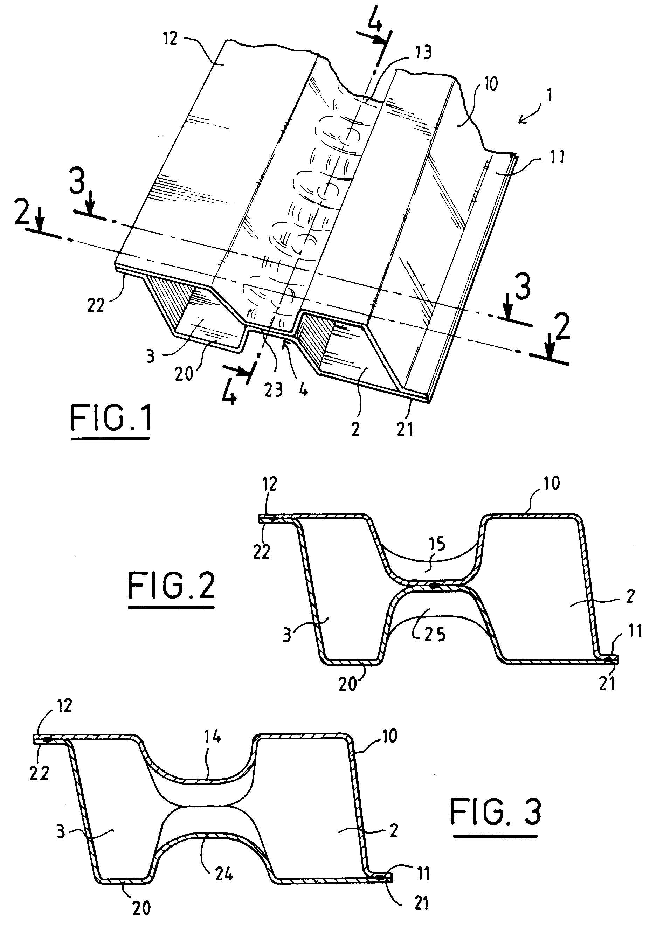

Sur la Fig. 1, on a représenté une poutre d'absorption d'énergie, notamment pour longerons ou traverses de véhicules, et désignée dans son ensemble par la référence 1.

Cette poutre 1 a la forme générale d'un I et comporte deux éléments profilés 10 et 20 coopérant l'un avec l'autre pour former deux caissons 2 et 3 reliés entre eux par une âme centrale 4 et soudés l'un à l'autre au niveau de leurs bords latéraux, respectivement 11, 21 et 12, 22, et de leurs parties, respectivement 13 et 23, formant l'âme centrale 4.

Cette poutre 1 comporte également des moyens d'organisation et de contrôle de la déformation de ladite poutre 1 lors d'une sollicitation mécanique en compression axiale, comme par exemple un choc.

Comme représenté sur les Figs 1 à 4, les moyens d'organisation et de contrôle de la déformation de la poutre 1 sont formés par une succession de saillies, respectivement 14 et 24, et de creux, respectivement 15 et 25, ménagés sur les parties, respectivement 13 et 23, des éléments profilés, respectivement 10 et 20, formant l'âme centrale 4.

Les saillies 14 et 24 et les creux 15 et 25 sont disposés en vis à vis les uns des autres pour réaliser sur ladite âme centrale 4 une succession longitudinale de portions en contact 5 et de cavités 6.

Les portions en contact 5 sont soudées entre elles.

Les creux 15 et 25 sont réalisés par emboutissage et présentent une forme ovoïde dans le sens transversal de la poutre 1.

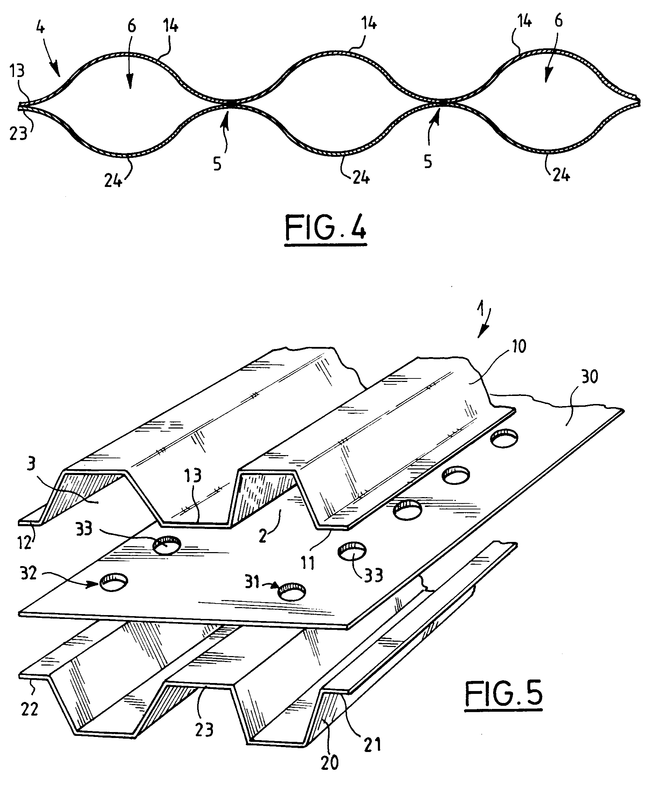

Les saillies 14 et 24 situées entre les creux 15 et 25 sont formées par des portions de surface courbes, comme représentées sur la Fig. 4.

Les saillies 14 et 24 et les creux 15 et 25 déterminent une succession d'ondulations continues non développables.

On entend par surface non développable une surface qui, pour devenir plane, nécessite des déformations plastiques au moins localisées du matériau constitutif de la surface.

Ainsi, les parties 13 et 23 des éléments profilés 10 et 20 munies des ondulations telles que définies ci-dessus sont des surfaces non développables.

De ce fait, lors d'une sollicitation mécanique essentiellement en compression axiale de la poutre 1, cette poutre 1 se déforme selon les ondulations préformées sur l'âme centrale 4.

Ces ondulations étant symétriques de part et d'autre de l'âme centrale 4, la déformation de la poutre 1 s'organisera autour de ces ondulations réalisées lors de l'emboutissage et la déformation de la poutre 1 sera symétrique.

Or, la déformation naturelle d'une poutre ne comportant pas les ondulations préformées est antisymétrique, c'est à dire qu'en face d'un creux effectué sur une face de la poutre, on obtient un pli de déformation sur la face opposée.

Le mode de déformation symétrique de la poutre 1 selon l'invention permet d'absorber plus d'énergie à masse égale que la déformation antisymétrique.

Par ailleurs, le fait d'avoir des ondulations non développables, ces ondulations, lors de la déformation de la poutre 1, ne peuvent pas se développer et en plus du pliage en accordéon de ladite poutre 1, on engendre un allongement du métal constituant cette poutre ce qui augmente encore la quantité d'énergie absorbée.

Selon un mode de réalisation préférentiel, les creux 15 et 25 se prolongent sur les parties des éléments profilés 10 et 20 adjacentes aux parties 13 et 23 formant l'âme centrale 4.

Le pas entre deux creux 15 et 25 successifs est déterminé en fonction de l'organisation souhaitée de la déformation de ladite poutre 1 lors d'une sollicitation mécanique en compression axiale.

Selon une variante représentée à la Fig. 5, les moyens d'organisation et de contrôle de la déformation de la poutre 1 sont formés par une tôle plane 30 intercalée entre les deux éléments profilés 10 et 20, traversant chaque caisson 2 et 3 et soudée auxdits éléments profilés 10 et 20 au niveau de leurs bords latéraux, respectivement 11, 21 et 12, 22, et de leurs parties 13 et 23 formant l'âme centrale 4.

Cette tôle plane 30 est percée, au niveau de chaque caisson respectivement 2 et 3, d'au moins une rangée, respectivement 31 et 32, d'orifices 33.

Les orifices 33 de chaque rangée 31 située dans le premier caisson 2 sont symétriques aux orifices 33 de chaque rangée 32 située dans le second caisson 3 par rapport à l'âme centrale 4.

Ces orifices 33 fragilisent la tôle 30 ce qui permet d'organiser, dans des zones déterminées, la déformation de la poutre 1 lors d'une sollicitation mécanique en compression axiale.

Le pas entre deux orifices adjacents 33 de chaque rangée 31 et 32 est déterminé en fonction de l'organisation souhaitée de la déformation de la poutre 1 lors d'une sollicitation mécanique en compression axiale.

Chaque caisson 2 et 3 présente une section de forme dissymétrique au niveau des dimensions des parois dudit caisson et/ou de l'angle formé par deux parois adjacentes et/ou du rayon de courbure en reliant deux parois adjacentes.

Cette dissymétrie de construction des caissons 2 et 3 de la poutre 1 permet d'obtenir une poutre plus rigide en torsion et en flexion dans toute les directions de l'espace qu'une poutre parfaitement symétrique.

Selon une variante, les parois de caisson 2 et 3 de la poutre 1 peuvent comporter, en plus des aménagements précédemment décrits, des ondulations continues non développables, non représentées, et dirigées dans le sens longitudinal de la poutre 1.

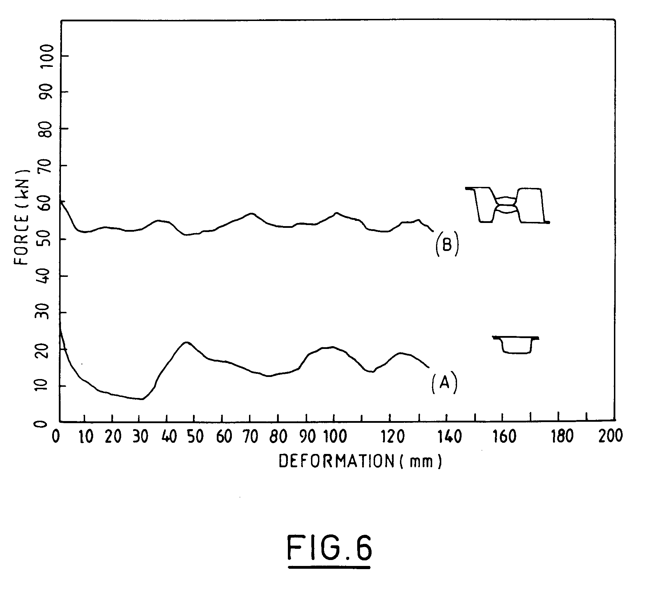

Sur la Fig. 6, on représenté une première courbe A qui montre l'écrasement en millimètres d'une première poutre selon l'état de la technique et une seconde courbe B qui montre l'écrasement en millimètres d'une seconde poutre selon l'invention à masse égale en fonction de la force nécessaire pour provoquer cet écrasement.

On constate sur la courbe A qu'après un pic à 40kN nécessaire à l'amorce de la déformation, la force moyenne pour l'écrasement de la poutre correspondante est de 18 kN.

Sur la courbe B, après un pic à 60kN nécessaire à la l'amorce de la déformation, la force moyenne nécessaire pour réaliser l'écrasement de la poutre correspondante est de 55kN.

De plus, on constate que la courbe B est plus plate que la courbe A et le pic d'amorce de la déformation est faible.

On voit donc sur ces courbes que pour une masse égale, la force moyenne pour déformer la poutre selon l'invention est plus grande que la force moyenne pour déformer la poutre selon l'état de la technique.

Par conséquent, pour absorber la même quantité d'énergie il suffit d'utiliser une poutre selon l'invention de masse totale quasiment deux fois inférieures à celle de la poutre selon l'état de la technique d'où un gain de poids de 50% à performances égales.

L'organisation de la déformation avec une poutre selon l'invention gère l'ensemble des déformations locale et évite ainsi une rupture du métal par excès de déformation.

La poutre peut être employée par exemple dans les véhicules automobiles ou ferroviaires et, d'une manière générale, dans toutes structures où des organes d'absorption d'énergie sont utiles.

## Revendications

1. Poutre d'absorption d'énergie, notamment pour longerons ou traverses de véhicules, qui a en section la forme générale d'un I et comporte deux éléments profilés (10, 20) coopérant l'un avec l'autre pour former deux caissons (2, 3) reliés entre eux par une âme centrale (4) et soudés l'un à l'autre au niveau de leurs bords latéraux (11, 21 ; 12, 22) et de leurs parties (13 ; 23)formant l'âme centrale, (4) caractérisée en ce qu'elle comporte des moyens (14, 15, 24, 25, 30, 31, 32, 33) d'organisation et de contrôle de la déformation de ladite poutre (1) lors d'une sollicitation mécanique en compression axiale formés par des saillies (14, 24) et des creux (15, 25) ménagés sur chaque partie (13, 23) des éléments profilés (10, 20) formant l'âme centrale (4) et en vis à vis les uns des autres pour réaliser sur ladite âme (4) une succession longitudinale de portions en contact (5) et de cavités (6), lesdites portions en contact (5) étant soudées entre elles.

2. Poutre selon la revendication 1, caractérisée en ce que les creux (15, 25) sont réalisés par emboutissage et ont une forme ovoïde dans le sens transversal de ladite poutre (1).

3. Poutre selon les revendications 1 et 2, caractérisée en ce que les creux (15, 25) se prolongent sur les parties des éléments profilés (10, 20) adjacentes aux parties (13, 23) formant l'âme centrale (4).

4. Poutre selon la revendication 1, caractérisée en ce que les saillies (14, 24) situées entre les creux (15, 25) sont formées par des portions de surface courbes.

5. Poutre selon l'une des revendications 1 à 4, caractérisée en ce que les saillies (14, 24) et les creux (15, 25) déterminent une succession d'ondulations continues non développables.

6. Poutre selon l'une des revendications 1 à 5, caractérisée en ce que le pas entre deux creux (respectivement 15, 25) successifs est déterminé en fonction de l'organisation souhaitée de la déformation de ladite poutre (1) lors d'une sollicitation mécanique en compression axiale.

7. Poutre selon la revendication 1, caractérisée en ce que les moyens d'organisation et de contrôle de la déformation de la poutre (1) sont formés par une tôle plane (30) intercalée entre les deux éléments profilés (10, 20), traversant chaque caisson (2, 3) et soudée auxdits éléments (10, 20) au niveau de leurs bords latéraux (11, 21 ; 12, 22) et de leurs parties (13 ; 23) formant l'âme centrale (4), ladite tôle plane (30) étant percée, au niveau de chaque caisson (2, 3), d'au moins une rangée (31, 32) d'orifices (33) et les orifices (33) de chaque rangée (31) située dans le premier caisson (2) étant symétriques aux orifices (33) de chaque rangée (32) située dans le second caisson (3) par rapport à l'âme centrale (4).

8. Poutre selon la revendication 7, caractérisée en ce que le pas entre deux orifices adjacents (33) de chaque rangée (31, 32) est déterminé en fonction de l'organisation souhaitée de la déformation de ladite poutre lors d'une sollicitation mécanique en compression axiale.

9. Poutre selon la revendication 1, caractérisée en ce que chaque caisson (2, 3) présente une section de forme dissymétrique au niveau des dimensions des parois dudit caisson (2, 3).

10. Poutre selon la revendication 1, caractérisée en ce que chaque caisson (2, 3) présente une section de forme dissymétrique au niveau de l'angle formé par deux parois adjacentes dudit caisson (2, 3)

11. Poutre selon la revendication 1, caractérisé en ce que chaque caisson (2, 3) présente une section de forme dissymétrique au niveau du rayon de courbure reliant deux parois adjacentes dudit caisson (2, 3).

12. Poutre selon la revendication 1, caractérisée en ce que chaque caisson (2, 3) présente une section de forme dissymétrique au niveau des dimensions des parois dudit caisson (2, 3), de l'angle formé par deux parois adjacentes et du rayon de courbure reliant deux parois adjacentes.

13. Poutre selon l'une quelconque des revendications précédentes, caractérisée en ce que les parois des caissons (2, 3) comportent des ondulations continues non développables et dirigées dans le sens longitudinal de ladite poutre (1).

## Claims

1. Energy absorption beam, particularly for longitudinal or transverse members of vehicles, which has in section the general shape of an I and two profiled elements (10, 20) cooperating with one another for forming two compartments (23) interconnected by a central web (4) and welded to one another at their lateral edges (11, 21; 12, 22) and their portions (13, 23) forming the central web (4), characterized in that it has means (14, 15, 24, 25, 30, 31, 32, 33) for organizing and controlling the deformation of said beam (1) during a mechanical, axial compression stress formed by projections (14, 24) and hollows (15, 25) formed on each portion (13, 23) of the profiled elements (10, 20) forming the central web (4) and facing one another in order to produce on said web (4) a longitudinal succession of contact portions (5) and cavities (6), said contact portions (5) being welded together.

2. Beam according to claim 1, characterized in that the hollows (15, 25) are produced by stamping and have an ovoid shape in the transverse direction of said beam (1).

3. Beam according to claims 1 and 2, characterized in that the hollows (15, 25) are extended on the portions of the profiled elements (10, 20) adjacent to the portions (13, 24) forming the central web (4).

4. Beam according to claim 1, characterized in that the projections (14, 24) located between the hollows (15, 25) are formed by curved surface portions.

5. Beam according to one of the claims 1 to 4, characterized in that the projections (14, 24) and the hollows (15, 25) determine a succession of continuous, non-developable corrugations.

6. Beam according to one of the claims 1 to 5, characterized in that the spacing between two successive hollows (respectively 15, 25) is determined as a function of the desired organization of the deformation of said beam (1) during a mechanical, axial compression stress.

7. Beam according to claim 1, characterized in that the means for the organization and control of the deformation of the beam (1) are formed by a planar metal sheet (30) interposed between two profiled elements (10, 20) traversing each compartment (2, 3) and welded to said ends (10, 20) at their lateral edges (11, 21; 12, 22) and their portions (13, 23) forming the central web (4), said planar sheet (30) being perforated, at each compartment (2, 3), with at least one row (31, 32) of orifices (33) and the orifices (33) of each row (31) in the first compartment (2) are symmetrical to the orifices (33) of each row (32) in the second compartment (3) with respect to the central web (4).

8. Beam according to claim 7, characterized in that the spacing between two adjacent orifices (33) of each row (31, 32) is determined as a function of the desired organization of the deformation of said beam during a mechanical, axial compression stress.

9. Beam according to claim 1, characterized in that each compartment (2, 3) has an asymmetrical section with respect to the dimensions of the walls of said compartment (2, 3).

10. Beam according to claim 1, characterized in that each compartment (2, 3) has an asymmetrical section with respect to the angle formed by two adjacent walls of said compartment (2, 3).

11. Beam according to claim 1, characterized in that each compartment (2, 3) has an asymmetrical section with respect to the radius of curvature linking two adjacent walls of said compartment (2, 3).

12. Beam according to claim 1, characterized in that each compartment (2, 3) has an asymmetrical section with respect to the dimensions of the walls of said compartment (2, 3), the angle formed by two adjacent walls and the radius of curvature linking two adjacent walls.

13. Beam according to one of the preceding claims, characterized in that the walls of the compartments (2, 3) have continuous, non-developable corrugations in the longitudinal direction of said beam (1).

## Patentansprüche

1. Energieabsorptionsträger, insbesondere für Rahmenlängsträger und Rahmenseitenträger von Fahrzeugen, der im Schnitt die allgemeine Form eines I hat und zwei Profilelemente (10, 20) aufweist, die zur Bildung zweier Zellen (2, 3) zusammenwirken, welche miteinander durch einen Mittelsteg (4) verbunden und an ihren Seitenrändern (11, 21; 12, 22) sowie an ihren den Mittelsteg (4) bildenden Teilen (13; 23) miteinander verschweißt sind, dadurch gekennzeichnet, daß er Einrichtungen (14, 15, 24, 25, 30, 31, 32, 33) zum Organisieren und Steuern der Verformung des Trägers (1) durch eine axiale mechanische Druckbelastung aufweist, die durch Vorsprünge (14, 24) und Vertiefungen (15, 25) gebildet sind, welche in jedem Bereich (13, 23) der den Mittelsteg (4) bildenden Profilelemente (10, 20) und einander gegenüberliegend ausgebildet sind, um auf dem Steg (4) eine längsgerichtete Abfolge von Kontaktbereichen (5) und Hohlräumen (6) zu bilden, wobei die Kontaktbereiche (5) miteinander verschweißt sind.

2. Träger nach Anspruch 1, dadurch gekennzeichnet, daß die Vertiefungen (15, 25) durch Tiefziehen hergestellt sind und in Querrichtung des Trägers Eiform haben.

3. Träger nach einem der Ansprüche 1 und 2, dadurch gekennzeichnet, daß die Vertiefungen (15, 25) in die Teile der Profilelemente (10, 20) hinein verlängert sind, die den den Mittelsteg (4) bildenden Teilen (13, 23) benachbart sind.

4. Träger nach Anspruch 1, dadurch gekennzeichnet, daß die zwischen den Vertiefungen (15, 25) befindlichen Vorsprünge (14, 24) durch gekrümmte Flächenbereiche gebildet sind.

5. Träger nach einem der Ansprüche 1 bis 4, dadurch gekennzeichnet, daß die Vorsprünge (14,24) und die Vertiefungen (15, 25) eine Abfolge von nicht abwickelbaren fortlaufenden Wellen bilden.

6. Träger nach einem der Ansprüche 1 bis 5, dadurch gekennzeichnet, daß der Abstand zwischen zwei aufeinanderfolgenden Vertiefungen (15 bzw. 25) in Abhängigkeit von der gewünschten Organisation der Verformung des Trägers (1) bei einer axialen mechanischen Druckbelastung bestimmt ist.

7. Träger nach Anspruch 1, dadurch gekennzeichnet, daß die Einrichtungen zum Organisieren und Steuern der Verformmung des Trägers (1) durch ein zwischen den beiden Profilelementen (10, 20) angeordnetes ebenes Blech (30) gebildet sind, das jede Zelle (2, 3) durchquert und mit den Elementen (10, 20) an deren Seitenrändern (11, 21; 12, 22) und deren den Mittelsteg (4) bildenden Teilen (13; 23) verschweißt ist, wobei das ebene Blech (30) in jeder Zelle (2, 3) von wenigstens einer Reihe (31, 32) von Öffnungen (33) durchsetzt ist und die Öffnungen (33) jeder in der ersten Zelle (2) befindlichen Reihe (31) in bezug auf den Mittelsteg (4) symmetrisch zu den Öffnungen (33) jeder Reihe (32) in der zweiten Zelle (3) sind.

8. Träger nach einem der Ansprüche 7, dadurch gekennzeichnet, daß der Abstand zwischen zwei benachbarten Öffnungen (33) jeder Reihe (31, 32) in Abhängigkeit von der gewünschten Organisation der Verformung des Trägers bei einer axialen mechanischen Druckbelastung bestimmt ist.

9. Träger nach Anspruch 1, dadurch gekennzeichnet, daß jede Zelle (2, 3) einen asymmetrischen Querschnitt in bezug auf die Abmessungen der Wände der Zellen (2, 3) aufweist.

10. Träger nach Anspruch 1, dadurch gekennzeichnet, daß jede Zelle (2, 3) einen asymmetrischen Querschnitt in bezug auf den von zwei Wänden der Zelle (2, 3) gebildeten Winkel aufweist.

11. Träger nach Anspruch 1, dadurch gekennzeichnet, daß jede Zelle (2, 3) einen asymmetrischen Querschnitt in bezug auf den Krümmungsradius aufweist, der zwei benachbarte Wände der Zelle (2, 3) miteinander verbindet.

12. Träger nach Anspruch 1, dadurch gekennzeichnet, daß jede Zelle (2, 3) einen asymmetrischen Querschnitt in bezug auf die Abmessungen der Wände der Zelle (2, 3), des von zwei benachbarten Wänden gebildeten Winkels und des zwei benachbarte Wände verbindenden Krümmungswinkels aufweist.

13. Träger nach einem der vorhergehenden Ansprüche, dadurch gekennzeichnet, daß die Wände der Zellen (2, 3) nicht abwickelbare fortlaufende und in Längsrichtung des Trägers (1) gerichtete Wellen aufweisen.
